# EUROPEAN PATENT APPLICATION

(11) **EP 3 957 938 A1**
(43) Date of publication of application: **23.02.2022**
(21) Application number: 20790906.0
(22) Date of filing: 01.04.2020
(51) Int. Cl.: F25D 29/00, F25D 23/00, G06Q 10/00

(54) **INFORMATION PROCESSING DEVICE, INFORMATION PROCESSING METHOD, AND FOOD STORAGE DEVICE**

(30) Priority: 15.04.2019 JP 2019076759
(71) Applicant: Sony Group Corporation, Tokyo 108-0075 (JP)
(72) Inventor: IKENAGA, Mari, Tokyo 108-0075 (JP)
(74) Representative: 2SPL Patentanwälte PartG mbB
(86) International application number: PCT/JP2020/014973
(87) International publication number: WO 2020/213394

(57) **Abstract**

The present technology relates to an information processing apparatus, an information processing method, and a food preservation apparatus each capable of more appropriately outputting a response concerning a food. Provided is an information processing apparatus including a processing unit configured to: manage, as information regarding a food preserved in a preservation cabinet, food information containing ownership right information regarding an ownership right for each food; generate, in a case where information from an identified user contains the information regarding the ownership right, a response according to the ownership right information regarding a desired food of the user, on the basis of the managed food information; and output the generated response. The present technology is applicable to, for example, a device that makes up a food information management system.

## Description

### TECHNICAL FIELD

The present technology relates to an information processing apparatus, an information processing method, and a food preservation apparatus, and particularly relates to an information processing apparatus, an information processing method, and a food preservation apparatus each capable of more appropriately outputting a response concerning a food.

### BACKGROUND ART

Heretofore, research and development have been made for improving the performance of a home electric appliance such as a refrigerator. For example, various technologies have been proposed as a technology in keeping a food in a refrigerator (see, for example, Patent Documents 1 to 3).

### CITATION LIST

### PATENT DOCUMENT

Patent Document 1: Japanese Patent Application Laid-Open No. 2017-133825
Patent Document 2: Japanese Patent Application Laid-Open No. 2017-215067
Patent Document 3: Japanese Patent Application Laid-Open No. 2018-95450

### SUMMARY OF THE INVENTION

### PROBLEMS TO BE SOLVED BY THE INVENTION

Meanwhile, only a person who put a food in a refrigerator for preservation often knows for whom the food is. It is therefore required to more appropriately output a response concerning a food preserved in a refrigerator.

The present technology has been made in view of the circumstances described above, and is intended to more appropriately output a response concerning a food.

### SOLUTIONS TO PROBLEMS

An aspect of the present technology is directed to an information processing apparatus including a processing unit configured to: manage, as information regarding a food preserved in a preservation cabinet, food information containing ownership right information regarding an ownership right for each food; generate, in a case where information from an identified user contains the information regarding the ownership right, a response according to the ownership right information regarding a desired food of the user, on the basis of the managed food information; and output the generated response.

An aspect of the present technology is directed to an information processing method including: causing an information processing apparatus to manage, as information regarding a food preserved in a preservation cabinet, food information containing ownership right information regarding an ownership right for each food; causing the information processing apparatus to generate, in a case where information from an identified user contains the information regarding the ownership right, a response according to the ownership right information regarding a desired food of the user, on the basis of the managed food information; and causing the information processing apparatus to output the generated response.

According to an aspect of the present technology, each of the information processing apparatus and the information processing method involves managing, as information regarding a food preserved in the preservation cabinet, food information containing ownership right information regarding an ownership right for each food, generating, in a case where information from an identified user contains the information regarding the ownership right, a response according to the ownership right information regarding a desired food of the user, on the basis of the managed food information, and outputting the generated response.

An aspect of the present technology is directed to a food preservation apparatus including a preservation unit configured to preserve a food; and a processing unit configured to perform processing regarding the food. The processing unit manages, as information regarding the food preserved in the preservation unit, food information containing ownership right information regarding an ownership right for each food. The processing unit generates, in a case where information from an identified user contains the information regarding the ownership right, a response according to the ownership right information regarding a desired food of the user, on the basis of the managed food information. The processing unit outputs the generated response.

According to an aspect of the present technology, the food preservation apparatus includes the preservation unit configured to preserve a food, and involves managing, as information regarding the food preserved in the preservation unit, food information containing ownership right information regarding an ownership right for each food, generating, in a case where information from an identified user contains the information regarding the ownership right, a response according to the ownership right information regarding a desired food of the user, on the basis of the managed food information, and outputting the generated response.

According to an aspect of the present technology, each of the information processing apparatus and the food preservation apparatus may be an independent apparatus or may be an internal block that makes up a single apparatus.

### BRIEF DESCRIPTION OF DRAWINGS

Fig. 1 is a diagram that illustrates an example of a configuration of a food information management system to which the present technology is applied in accordance with an embodiment.
Fig. 2 is a diagram that illustrates an example of a configuration of an agent device.
Fig. 3 is a diagram that illustrates an example of a configuration of a refrigerator.
Fig. 4 is a diagram that illustrates an example of a configuration of a server.
Fig. 5 is a flowchart that depicts a flow of putting-in processing.
Fig. 6 is a diagram that illustrates an example of a user information table.
Fig. 7 is a diagram that illustrates an example of a food information table.
Fig. 8 is a flowchart that depicts a flow of taking-out processing.
Fig. 9 is a diagram that illustrates a specific example of a response in a case where a food contains a foodstuff which a user cannot eat.
Fig. 10 is a diagram that illustrates a specific example of a response in a case where an utterance from a user contains a question about an ownership right.
Fig. 11 is a block diagram that illustrates a first example of a configuration of a system to which the present technology is applied in accordance with an embodiment.
Fig. 12 is a block diagram that illustrates a second example of the configuration of the system to which the present technology is applied in accordance with an embodiment.
Fig. 13 is a block diagram that illustrates a third example of the configuration of the system to which the present technology is applied in accordance with an embodiment.
Fig. 14 is a block diagram that illustrates a fourth example of the configuration of the system to which the present technology is applied in accordance with an embodiment.
Fig. 15 is a diagram that illustrates a configuration example of a computer.

### MODE FOR CARRYING OUT THE INVENTION

Embodiments of the present technology will be described below with reference to the drawings. Note that the description is given in the following order.

1. Embodiments of the present technology
2. Modifications
3. Configuration of system
4. Configuration of computer

### <1. Embodiments of the present technology>

### (Configuration of system)

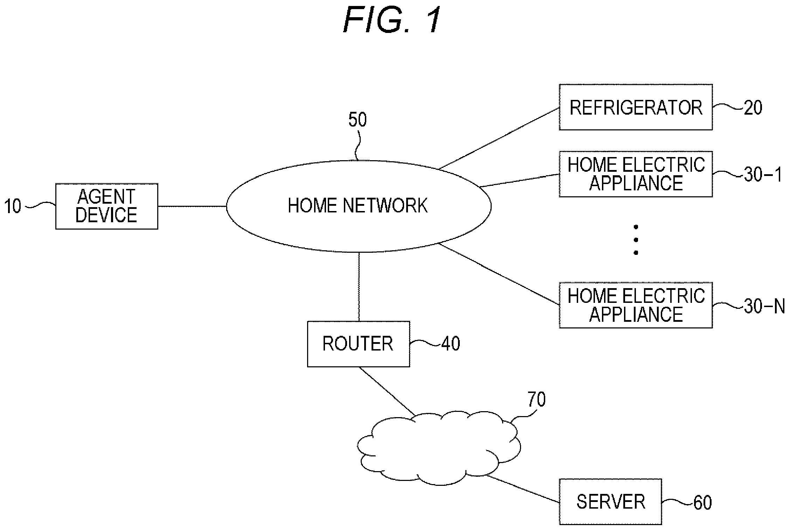

Fig. 1 illustrates an example of a configuration of a food information management system to which the present technology is applied in accordance with an embodiment.

In Fig. 1, the food information management system includes an agent device 10, a refrigerator 20, home electric appliances 30-1 to 30-N (N: an integer that is not less than one), a router 40, and a server 60.

Furthermore, in the food information management system, the agent device 10, the refrigerator 20, the home electric appliances 30-1 to 30-N, and the router 40 are installed in a user's home or the like, and are interconnected via a home network 50. The home network 50 includes, for example, a network such as a wireless local area network (LAN).

The agent device 10 is a dialogue agent-equipped device. A dialogue agent refers to a service developed by a dialogue system that enables exchange of some information (dialogue) with a user.

Examples of the agent device 10 may include, but not limited to, a smart speaker, a display-equipped speaker, a smartphone, a television receiver, a robot, a wearable device, a tablet terminal, a display apparatus, a personal computer, and other home electric appliances. Note that the agent device 10 may be integrated with a home electric appliance. For example, the agent device 10 may be a display-equipped refrigerator.

The refrigerator 20 is a device (a preservation cabinet) for preserving articles such as foods at low temperature. In addition to a normal preserving function, the refrigerator 20 also has a function of managing food information in cooperation with the agent device 10 and the server 60, and other functions.

Examples of the home electric appliance 30-1 may include, but not limited to, cooking devices such as a microwave oven, an electric oven, and a rice cooker, and other white goods. Furthermore, the home electric appliance 30-1 may be an information terminal (e.g., a smartphone, etc.) of a user. The home electric appliance 30-1 is capable of providing various kinds of information in cooperation with the agent device 10, the refrigerator 20, or the server 60.

Examples of each of the home electric appliances 30-2 to 30-N, which are similar to the home electric appliance 30-1, may include, but not limited to, devices such as a cooking device and an information terminal. Note that the home electric appliances 30-1 to 30-N will be simply referred to as the home electric appliance(s) 30 below in a case where they are not necessarily differentiated from one another.

The router 40 is connectable to the Internet 70, and relays data between the home network 50 and the Internet 70. The agent device 10, the refrigerator 20, and the home electric appliance 30 are connectable to the server 60 via the Internet 70 by way of the router 40.

The server 60 includes, for example, one or more servers, and is installed in a data center or the like. For example, the server 60 manages various kinds of information in a database, performs various kinds of processing in accordance with a request from the agent device 10, the refrigerator 20, or the home electric appliance 30, and provides the device which sends the request with various kinds of information if necessary.

### (Configuration of agent device)

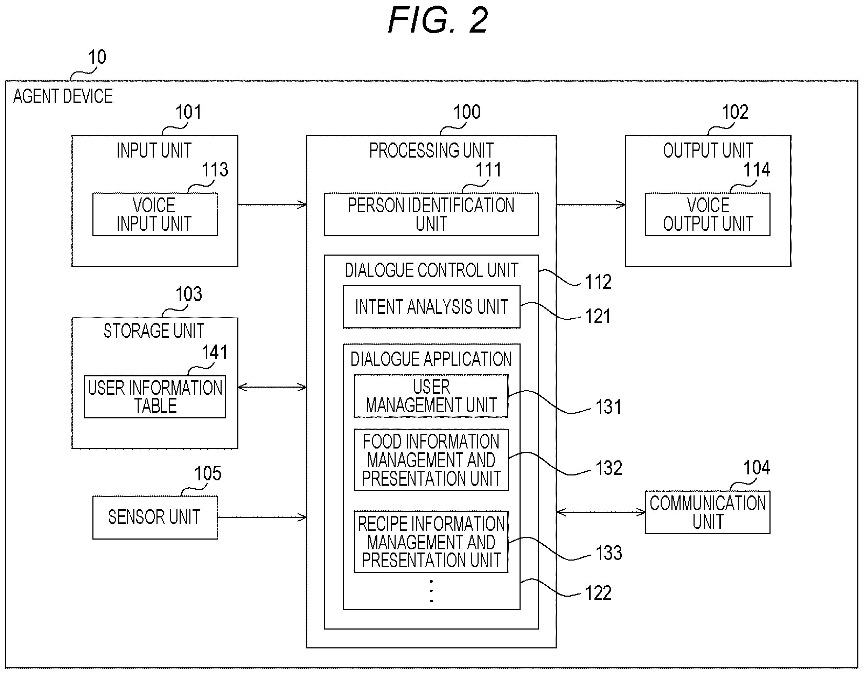

Fig. 2 illustrates an example of a configuration of the agent device 10 in Fig. 1, as an information processing apparatus to which the present technology is applied.

In Fig. 2, the agent device 10 includes a processing unit 100, an input unit 101, an output unit 102, a storage unit 103, a communication unit 104, and a sensor unit 105.

The processing unit 100 includes, for example, a processor such as a central processing unit (CPU) or a microcontroller, a field programmable gate array (FPGA), and the like. The processing unit 100 is a main processing apparatus that controls operations of the respective units and performs various kinds of arithmetic processing.

The processing unit 100 includes a person identification unit 111 and a dialogue control unit 112. Furthermore, the dialogue control unit 112 includes an intent analysis unit 121 and a dialogue application 122. The dialogue application 122 includes a user management unit 131, a food information management and presentation unit 132, a recipe information management and presentation unit 133, and the like.

The person identification unit 111 receives an input from a person identification device and identifies a user such as an utterer or a putting-in/taking-out person. Note that the person identification unit 111 may include a person identification device or may receive a result of identification from an external person identification device. Furthermore, known technologies may be adopted as a method of identifying a person by a person identification device.

The dialogue control unit 112 exchanges some information with the user to perform control for a dialogue, with a function which the dialogue agent provides.

The intent analysis unit 121 receives data supplied thereto through the input unit 101. The intent analysis unit 121 converts voice data (text data) which the user (the utterer) inputs, into abstracted data handleable by the dialogue application 122 (i.e., into an expression understandable by a machine). For example, here, as a result of intent analysis, the meaning of a dialogue is expressed in the form of an intent which the user intends to execute and the form of an entity as a parameter for the intent.

The user management unit 131 performs processing for managing information regarding the user. For example, the user management unit 131 registers the information regarding the user, which is identified by the person identification unit 111, in a user information table 141 stored in the storage unit 103.

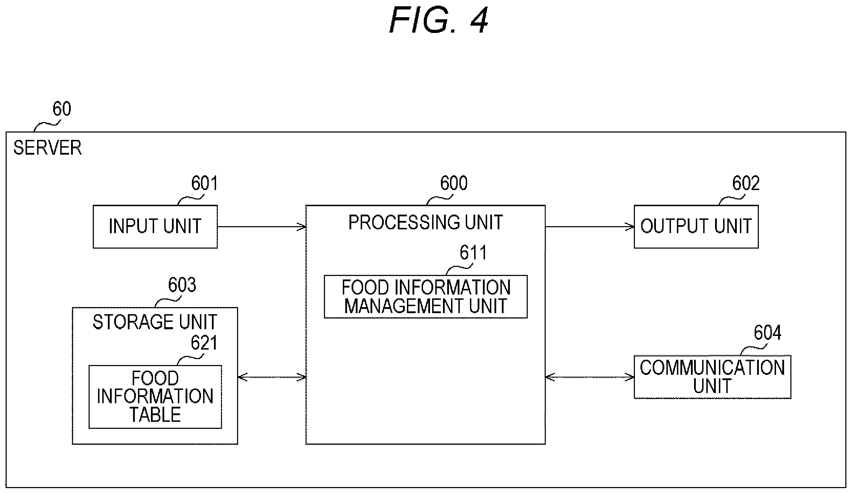

The food information management and presentation unit 132 performs processing of managing or presenting information regarding a food preserved in the refrigerator 20. For example, the food information management and presentation unit 132 accesses the server 60 via the Internet 70 to register the information regarding the food in a food information table (a food information table 621 in Fig. 4) or to respond to a dialogue with the user (e.g., a question from the user, etc.) on the basis of the information regarding the food read from the food information table.

The recipe information management and presentation unit 133 performs processing of managing or presenting information regarding a recipe of a dish. For example, the recipe information management and presentation unit 133 accesses the server 60 via the Internet 70 to acquire information regarding a recipe of a dish. The recipe information management and presentation unit 133 then presents the acquired information to a user or stores (holds) the acquired information.

The input unit 101 serves as an input interface with a user. The input unit 101 includes a voice input unit 113. The voice input unit 113 receives an input through a voice input device such as a microphone, and supplies the voice data or text data of the voice data to the processing unit 100.

The output unit 102 serves as an output interface with a user. The output unit 102 includes a voice output unit 114. The voice output unit 114 receives voice data from the processing unit 100, and outputs a voice (a sound) according to the received voice data, through a voice output device such as a speaker.

Note that examples of the input unit 101 may include, but not limited to, other input interfaces such as a physical button. Furthermore, examples of the output unit 102 may include, but not limited to, other output interfaces such as a display, a vibrating element, and an electronic sound buzzer.

The storage unit 103 includes, for example, a storage apparatus such as a semiconductor memory or a hard disk drive (HDD). The storage unit 103 stores various kinds of information in accordance with control by the processing unit 100.

The storage unit 103 stores the user information table 141 containing user information. The user information table 141 is a table for managing various attributes regarding each user for each user. These attributes may include, for example, the age, gender, name, and the like of a user, information regarding a food (e.g., a food which a user cannot eat due to an allergy or a religious reason, etc.), and the like.

The communication unit 104 includes a communication module compatible with wireless communication or wired communication conforming to a predetermined standard, and the like. The communication module is compatible with, for example, communication schemes such as a wireless LAN and cellular communication (e.g., LTE-Advanced, 5G).

The communication unit 104 transmits various kinds of information to other devices such as the refrigerator 20 and the server 60 via a network such as the home network 50 in accordance with control by the processing unit 100. In addition, the communication unit 104 receives various kinds of information from the other devices via the network such as the home network 50 in accordance with control by the processing unit 100.

The sensor unit 105 includes, for example, various sensor devices and the like. The sensor devices may include, for example, a measurement sensor and an image sensor.

Examples of the measurement sensor may include, but not limited to, a magnetic sensor, an acceleration sensor, a gyro sensor, a proximity sensor, a temperature sensor, a humidity sensor, and a biometric sensor. Furthermore, the image sensor includes, for example, an image sensor such as a complementary metal oxide semiconductor (CMOS) image sensor, a signal processing circuit, and the like.

Note that the configuration of the agent device 10 illustrated in Fig. 2 is merely an example. The agent device 10 does not necessarily include all of the constituent elements. For example, the agent device 10 may have a configuration excluding some of the constituent elements, such as the sensor unit 105. Alternatively, another constituent element may be added to the configuration of the agent device 10 illustrated in Fig. 2.

### (Configuration of refrigerator)

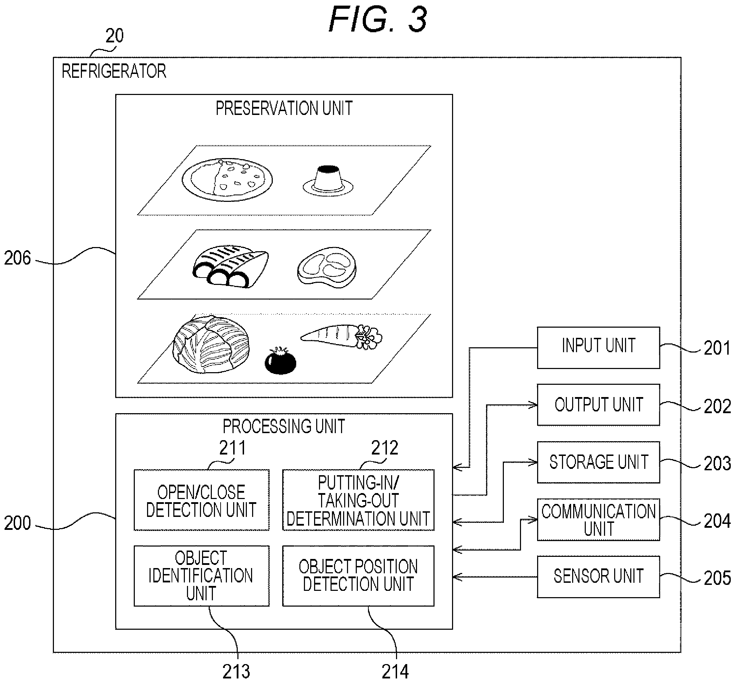

Fig. 3 illustrates an example of a configuration of the refrigerator 20 in Fig. 1, as a food preservation apparatus to which the present technology is applied.

In Fig. 3, the refrigerator 20 includes a processing unit 200, an input unit 201, an output unit 202, a storage unit 203, a communication unit 204, a sensor unit 205, and a preservation unit 206.

The processing unit 200 includes, for example, a processor such as a CPU. The processing unit 200 is a main processing apparatus that controls operations of the respective units and performs various kinds of arithmetic processing.

The input unit 201 serves as, for example, an input interface such as a physical button, a touch screen, or a microphone. The output unit 202 serves as, for example, an output interface such as a display or a speaker. The storage unit 203 includes, for example, a storage apparatus such as a semiconductor memory, and stores various kinds of information.

The communication unit 204 includes a communication module and the like conforming to a predetermined standard. The communication unit 204 transmits various kinds of information to other devices such as the agent device 10 and the server 60 via a network such as the home network 50. In addition, the communication unit 204 receives various kinds of information from the other devices via the network such as the home network 50.

The sensor unit 205 includes, for example, sensor devices such as an open/close sensor, an image sensor, and a depth sensor. The open/close sensor detects an open/closed state of a door of the refrigerator 20, and outputs a result of the detection. The image sensor captures an image of an object (e.g., a food) in the preservation unit 206, and outputs the captured image. The depth sensor recognizes a stereoscopic shape of an object (e.g., a food) in the preservation unit 206, and outputs three-dimensional information (distance information) regarding the object.

The preservation unit 206 is divided into predetermined tiers (e.g., an upper tier, a middle tier, a lower tier) as spaces for preservation. For example, foods can be sorted for each tier. In this example, the preservation unit 206 preserves cooked foods, processed foods, and the like in addition to meats, fishes, and vegetables.

Furthermore, the processing unit 200 includes an open/close detection unit 211, a putting-in/taking-out determination unit 212, an object identification unit 213, and an object position detection unit 214.

The open/close detection unit 211 detects an open/closed state of the door of the refrigerator 20 on the basis of the result of the detection by the open/close sensor for the door of the refrigerator 20. Note that the open/close detection unit 211 may serve as (a part of) the open/close sensor.

The putting-in/taking-out determination unit 212 determines whether a food is put in or taken out of (the preservation unit 206 of) the refrigerator 20, on the basis of the result of the detection as to the open/closed state of the door detected by the open/close detection unit 211. Alternatively, the putting-in/taking-out determination unit 212 tracks an identified food on the basis of an image captured by an image sensor in the preservation unit 206 (a captured image of a food preserved in the preservation unit 206), thereby determining whether the food is put in or taken out of the refrigerator 20.

The object identification unit 213 carries out object detection processing on the basis of an image captured by the image sensor in the preservation unit 206, thereby identifying a food placed in the preservation unit 206. Note that known technologies may be adopted as a method of detecting an object.

The object position detection unit 214 detects a position of a food identified by the object identification unit 213, on the basis of three-dimensional information regarding an object detected by a depth sensor in the preservation unit 206. The position of the food is represented by, for example, center coordinates of the food (three-dimensional coordinates along X-, Y-, and Z-axes), and the coordinates indicate a location where the food is placed. Note that known technologies may be adopted as a method of detecting a position of an object.

Note that the configuration of the refrigerator 20 illustrated in Fig. 3 is merely an example. The refrigerator 20 does not necessarily include all of the constituent elements. Furthermore, another constituent element may be added to the configuration of the refrigerator 20. For example, the refrigerator 20 may have the function of the agent device 10. Alternatively, the refrigerator 20 may be integrated with the agent device 10. That is, the refrigerator 20 may be, for example, a refrigerator having an agent function.

### (Configuration of server)

Fig. 4 illustrates an example of a configuration of the server 60 in Fig. 1, as an information processing apparatus to which the present technology is applied.

In Fig. 4, the server 60 includes a processing unit 600, an input unit 601, an output unit 602, a storage unit 603, and a communication unit 604.

The processing unit 600 includes a processor such as a CPU. The processing unit 600 is a main processing apparatus that controls operations of the respective units and performs various kinds of arithmetic processing.

The processing unit 600 includes a food information management unit 611. The food information management unit 611 manages the food information table 621 stored in the storage unit 603.

The input unit 601 serves as, for example, an input interface such as a keyboard or a mouse. The output unit 602 serves as an output interface such as a display or a speaker.

The storage unit 603 includes, for example, a storage apparatus such as a semiconductor memory or an HDD, and stores various kinds of information. The storage unit 603 stores the food information table 621 containing food information. The food information table 621 is a table for managing various attributes regarding each food for each food. These attributes may include, for example, information regarding a name of a dish, an ingredient of the dish, a date and time when the dish was put in the refrigerator 20, a date and time at which the dish was cooked, an ownership right of the dish, and the like.

The communication unit 604 includes a communication module and the like conforming to a predetermined standard. The communication unit 604 transmits various kinds of information to other devices such as the agent device 10 and the refrigerator 20 via a network such as the Internet 70. In addition, the communication unit 604 receives various kinds of information from the other devices via the network such as the Internet 70.

Note that the configuration of the server 60 illustrated in Fig. 4 is merely an example. The server 60 does not necessarily include all of the constituent elements. Furthermore, another constituent element may be added to the configuration of the server 60.

The foregoing description concerns the configuration of the food information management system. Next, a description will be given of processing to be carried out by the food information management system. Note that the following description is given on the assumption that the agent device 10 and the refrigerator 20 are installed in an identical space such as a kitchen.

### (Flow of putting-in processing)

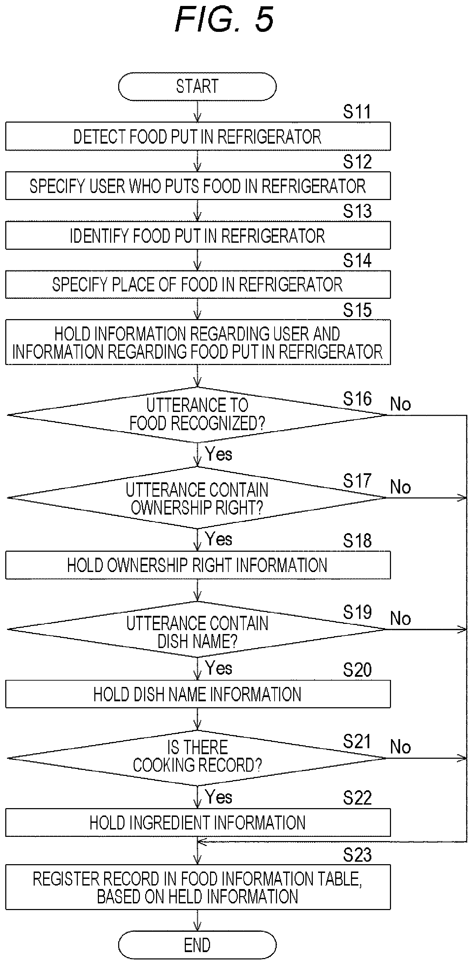

With reference to a flowchart of Fig. 5, first, a description will be given of a flow of putting-in processing to be carried out in putting a desired food in the refrigerator 20.

In step S11, the putting-in/taking-out determination unit 212 detects a food put in (the preservation unit 206 of) the refrigerator 20, on the basis of a result of detection by the open/close detection unit 211.

In step S12, the person identification unit 111 specifies a user who puts the food in (the preservation unit 206 of) the refrigerator 20.

Here, for example, the person identification unit 111 (the person identification device) performs processing such as facial recognition processing using an image captured by the sensor unit 105 (the image sensor) or utterer recognition processing using voice data from the voice input unit 113. The person identification unit 111 then holds information regarding the user identified at the time when the food is put in the refrigerator 20, as information regarding the user who puts the food in the refrigerator 20 (the putting-in person). In specifying the user, the person identification unit 111 appropriately refers to the user information table 141.

In step S13, the object identification unit 213 identifies and specifies the food put in (the preservation unit 206 of) the refrigerator 20.

In step S14, the object position detection unit 214 specifies a place of the food put in (the preservation unit 206 of) the refrigerator 20. As the place of the food, for example, center coordinates (a position of the center of gravity) of the food are represented by three-dimensional coordinates with respect to a certain position in the preservation unit 206.

Therefore, (the processing unit 100 of) the agent device 10 holds the information regarding the user who put the food in the refrigerator 20 and the information regarding the food put in the refrigerator 20, the information being sent from (the processing unit 200 of) the refrigerator 20 (S15).

In step S16, the dialogue control unit 112 determines whether to recognize that the user utters a food. Here, for example, the dialogue control unit 112 previously registers therein utterance patterns such as "This is my pudding." and "This rice with curry sauce is for Dad's supper.", and recognizes an utterance to a food by pattern matching.

In a case where it is determined by the determination processing task in step S16 that an utterance to a food is recognized, the processing proceeds to step S17.

At this time, the dialogue control unit 112 holds information regarding an utterer (e.g., a user ID) and the details of an utterance (e.g., the text of an utterance). Note that in a case where it is determined by the determination processing task in step S16 that an utterance to a food is not recognized ("No" in S16), the processing proceeds to step S23.

In step S17, the dialogue control unit 112 determines whether the utterance contains an ownership right. In a case where it is determined by the determination processing task in step S17 that the utterance contains an ownership right, the processing proceeds to step S18.

In step S18, the food information management and presentation unit 132 holds ownership right information according to the ownership right contained in the utterance. Here, for example, a user ID is specified from a user's designation such as "I" or "Dad" and is held as ownership right information.

When the processing task in step S18 ends, the processing proceeds to step S19. Note that in a case where it is determined by the determination processing task in step S17 that the utterance does not contain an ownership right ("No" in S17), the processing proceeds to step S23.

In step S19, the dialogue control unit 112 determines whether the utterance contains a dish name. In a case where it is determined by the determination processing task in step S19 that the utterance contains a dish name, the processing proceeds to step S20.

In step S20, the food information management and presentation unit 132 holds dish name information according to the dish name contained in the utterance. Here, for example, a dish name is specified from an utterance such as "pudding" or "rice with curry sauce" and is held as dish name information.

When the processing task in step S20 ends, the processing proceeds to step S21. Note that in a case where it is determined by the determination processing task in step S19 that the utterance does not contain a dish name ("No" in S19), the processing proceeds to step S23.

In step S21, the food information management and presentation unit 132 determines whether there is a cooking record of the food put in the refrigerator 20. In a case where it is determined by the determination processing task in step S21 that there is a cooking record, the processing proceeds to step S22.

In step S22, the food information management and presentation unit 132 holds ingredient information according to the cooking record of the food put in the refrigerator 20. Here, for example, in a case where rice with curry sauce is cooked on the basis of recipe information presented by the recipe information management and presentation unit 133, the food information management and presentation unit 132 holds a cooking record of "rice with curry sauce". Therefore, ingredients of "rice with curry sauce", such as beef, potatoes, carrots, onions, and rice, are specified from the recipe information and are held as ingredient information. Note that, here, a date and time when the rice with curry sauce was cooked may be held as cooking date and time information.

When the processing task in step S22 ends, the processing proceeds to step S23. Note that in a case where it is determined by the determination processing task in step S21 that there is no cooking record ("No" in S21), the processing proceeds to step S23.

In step S23, the food information management and presentation unit 132 registers a record concerning the food put in the refrigerator 20, in the food information table 621 stored in (the storage unit 603 of) the server 60 via a network such as the home network 50, on the basis of the held information.

In the foregoing determination processing tasks, for example, in a case where an utterance to a food is recognized ("Yes" in S16), the utterance contains an ownership right and a dish name ("Yes" in S17, "Yes" in S19), and it is determined that there is a cooking record ("Yes" in S21), the food information management and presentation unit 132 holds ownership right information, dish name information, and ingredient name information.

Therefore, the food information management and presentation unit 132 registers a record that includes the information regarding the date and time when the food was put in the refrigerator 20, the information regarding the place of the food in the refrigerator 20, the ownership right information, the dish name information, and the ingredient name information, in the food information table 621 on the basis of the information regarding the user who put the food in the refrigerator 20, the information regarding the food put in the refrigerator 20, the ownership right information, the dish name information, and the ingredient name information.

Furthermore, in the foregoing determination processing task, for example, in a case where an utterance to a food is not recognized ("No" in S16), the food information management and presentation unit 132 registers a record that includes the information regarding the date and time when the food was put in the refrigerator 20 and the information regarding the place of the food in the refrigerator 20, in the food information table 621 on the basis of the information regarding the user who put the food in the refrigerator 20 and the information regarding the food put in the refrigerator 20.

Moreover, in the foregoing determination processing tasks, for example, in a case where an utterance to a food is recognized ("Yes" in S16), but this utterance does not contain an ownership right ("No" in S17), the ownership right information is excluded from the record. In a case where this utterance does not contain a dish name ("No" in S19), the dish name information is excluded from the record. Likewise, in a case where there is no cooking record ("No" in S21), the ingredient information is excluded from the record.

When the processing task in step S23 ends, the putting-in processing illustrated in Fig. 5 ends.

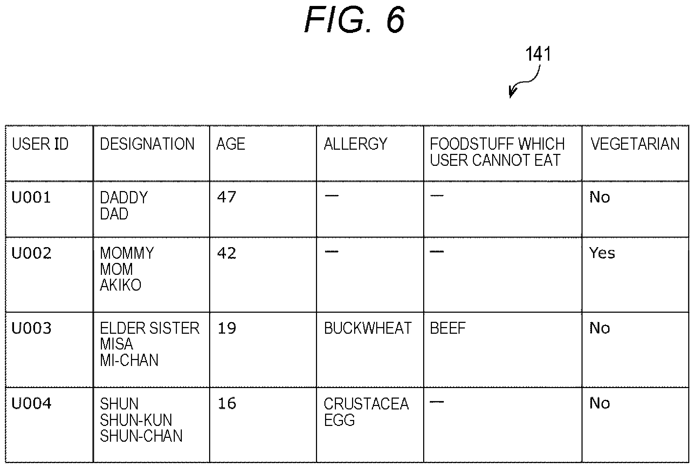

Here, Fig. 6 illustrates an example of the user information table 141.

In Fig. 6, the user information table 141 has items of "designation", "age", "allergy", "foodstuff which user cannot eat", and "vegetarian" for each user ID, and stores information according to each item. Note that examples of a foodstuff which a user cannot eat may include, but not limited to, foodstuffs which a user is prohibited to eat or intends to avoid eating due to religious reasons.

Information regarding "designation" is used for specifying, for example, an ownership right of a food in the refrigerator 20 and a user who put the food in the refrigerator 20. Furthermore, information regarding "allergy", "foodstuff which user cannot eat", and "vegetarian" is used for, for example, collation with foodstuffs of a cooked food (recipe information), and the like.

Specifically, user IDs U001, U002, U003, and U004 respectively allocated to a father, a mother, a daughter, and a son in a family are registered.

The father (U001) is 47 years old and is called "Daddy" or "Dad" in the family. He has no allergy and no foodstuff which he cannot eat. He is not a vegetarian. The mother (U002) is 42 years old and is called "Mommy", "Mom", or "Akiko" in the family. She has no allergy and no foodstuff which she cannot eat. She is a vegetarian.

The daughter (U003) is 19 years old and is called "Elder sister", "Misa", or "Mi-chan" in the family. She has an allergy to "buckwheat" and she cannot eat "beef". She is not a vegetarian. The son (U004) is 16 years old and is called "Shun", "Shun-kun", or "Shun-chan" in the family. He has allergies to "Crustacea" and "egg", but has no foodstuff which he cannot eat. He is not a vegetarian.

In carrying out the putting-in processing illustrated in Fig. 5, (the storage unit 103 of) the agent device 10 stores the user information table 141 illustrated in Fig. 6.

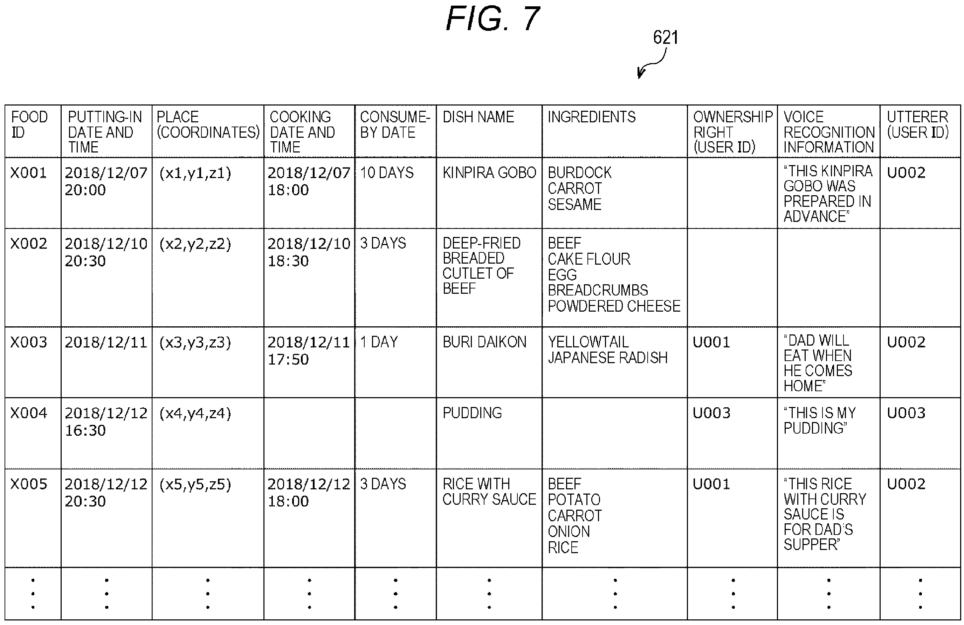

Furthermore, Fig. 7 illustrates an example of the food information table 621.

In Fig. 7, the food information table 621 has items of "putting-in date and time", "place", "cooking date and time", "consume-by date", "dish name", "ingredient", "ownership right", "voice recognition information", and "utterer" for each food ID, and stores information according to each item.

In the food information table 621, a record corresponds to a line of data identified by a food ID. A food ID is allocated as a unique ID for each food put in the refrigerator 20. The example of Fig. 7 exemplifies five records of data.

A record with a food ID "X001" indicates that "kinpira gobo", which is chopped burdock root and carrot cooked in soy sauce and sugar, was put in the refrigerator 20 at 20:00 on December 7, 2018, was placed at a location specified by coordinates (x1, y1, z1) in the preservation unit 206, was cooked at 18:00 on December 7, 2018, should be consumed until 10 days after, and was made using "burdock", "carrot", and "sesame" as its ingredients. Furthermore, the mother (U002) makes an utterance "This kinpira gobo was prepared in advance."; however, this utterance contains no ownership right.

A record with a food ID "X002" indicates that "deep-fried breaded cutlet of beef" was put in the refrigerator 20 at 20:30 on December 10, 2018, was placed at a location specified by coordinates (x2, y2, z2), was cooked at 18:30 on December 10, 2018, should be consumed until three days after, and was made using "beef", "cake flour", "egg", "breadcrumbs", and "powdered cheese" as its ingredients. Note that none of the users make an utterance to the "deep-fried breaded cutlet of beef".

A record with a food ID "X003" indicates that "buri daikon", which is "simmered yellowtail with Japanese radish", was put in the refrigerator 20 on December 11, 2018, was placed at a location specified by coordinates (x3, y3, z3), was cooked at 17:50 on December 11, 2018, should be consumed today or tomorrow, and was made using "yellowtail" and "Japanese radish" as its ingredients. Furthermore, the mother (U002) makes an utterance "Dad will eat this when he comes home". Since the utterance contains an ownership right of "buri daikon" indicated by the word "Dad", the user ID "U001" is registered as the ownership right.

A record with a food ID "X004" indicates that "pudding" was put in the refrigerator 20 at 16:30 on December 12, 2018 and was placed at a location specified by coordinates (x4, y4, z4). Furthermore, the daughter (U003) makes an utterance "This is my pudding". Since the utterance contains an ownership right of "pudding" indicated by the word "my", the user ID "U003" is registered as the ownership right.

A record with a food ID "X005" indicates that "rice with curry sauce" was put in the refrigerator 20 at 20:30 on December 12, 2018, was placed at a location specified by coordinates (x5, y5, z5), was cooked at 18:00 on December 12, 2018, should be consumed until three days after, and was made using "beef", "potato", "carrot", "onion", and "rice" as its ingredients. Furthermore, the mother (U002) makes an utterance "This rice with curry sauce is for Dad's supper". Since the utterance contains an ownership right of "rice with curry sauce" indicated by the word "Dad", the user ID "U001" is registered as the ownership right.

Note that a dish name may be acquired from not only the details of a user's utterance, but also recipe information. Furthermore, in addition to a dish name, for example, an ingredient, a consume-by date, a cooking date and time, and the like may also be acquired from recipe information.

By carrying out the putting-in processing illustrated in Fig. 5, (the storage unit 603 of) the server 60 stores the food information table 621 illustrated in Fig. 7.

The foregoing description concerns the flow of the putting-in processing.

Note that in the foregoing description, (the processing unit 200 of) the refrigerator 20 carries out the processing tasks in steps S11, S13, and S14, and (the processing unit 100 of) the agent device 10 carries out the processing tasks in steps S12 and S15 to S23. However, the processing unit 100 and the processing unit 200 may carry out any processing tasks. Furthermore, (the processing unit 600 of) the server 60 may carry out some of the processing tasks.

### (Flow of taking-out processing)

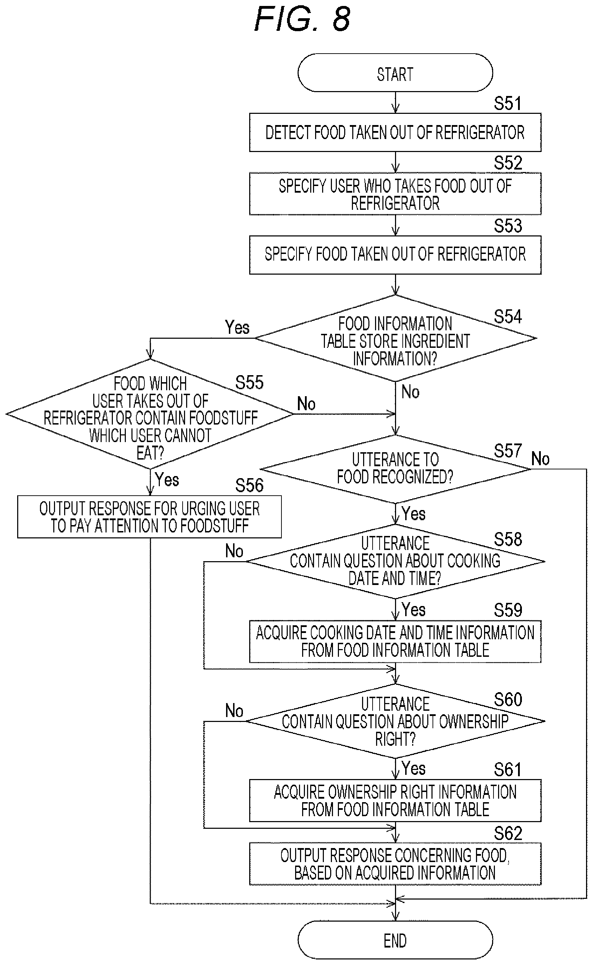

With reference to a flowchart of Fig. 8, next, a description will be given of a flow of taking-out processing to be carried out in taking a desired food out of the refrigerator 20.

In step S51, the putting-in/taking-out determination unit 212 detects a food taken out of (the preservation unit 206 of) the refrigerator 20, on the basis of a result of detection by the open/close detection unit 211.

In step S52, the person identification unit 111 specifies a user who takes the food out of (the preservation unit 206 of) the refrigerator 20. Therefore, information regarding the user identified at the time when the food is taken out of the refrigerator 20 is held as information regarding the user who takes the food out of the refrigerator 20 (the taking-out person).

In step S53, the object identification unit 213 identifies and specifies the food taken out of (the preservation unit 206 of) the refrigerator 20. Therefore, the object identification unit 213 specifies a food ID given to the food taken out of the refrigerator 20 at the time when the food was put in the refrigerator 20.

In step S54, the food information management and presentation unit 132 puts a query to the server 60 via the Internet 70, thereby referring to the food information table 621. The food information management and presentation unit 132 thus determines whether a record of the specified food includes ingredient information.

In a case where it is determined by the determination processing task in step S54 that the record includes the ingredient information, the processing proceeds to step S55. In step S55, the food information management and presentation unit 132 refers to the user information table 141 to determine whether the ingredient information regarding the specified food contains a foodstuff which the user who takes the food out of the refrigerator 20 cannot eat.

In a case where it is determined by the determination processing task in step S55 that the ingredient information contains a foodstuff which the user who takes the food out of the refrigerator 20 cannot eat, the processing proceeds to step S56. In step S56, the food information management and presentation unit 132 outputs a response for urging the user to pay attention to the relevant foodstuff.

That is, the user information table 141 has the items "allergy", "foodstuff which user cannot eat", and "vegetarian" for each user ID. Therefore, in a case where the food taken out of the refrigerator 20 contains a foodstuff which the user cannot eat, the food information management and presentation unit 132 is capable of outputting a response indicating that the food contains the relevant foodstuff.

Here, the following describes a specific example of an attention inviting response at the time when a food is taken out of the refrigerator 20. Note that, here, "S" represents a dialogue system, and "U" represents a user.

### • First specific example of attention inviting response

U: (Someone takes rice with curry sauce out of refrigerator 20)
S: "You will be better not to eat this rice with curry sauce since it contains beef."

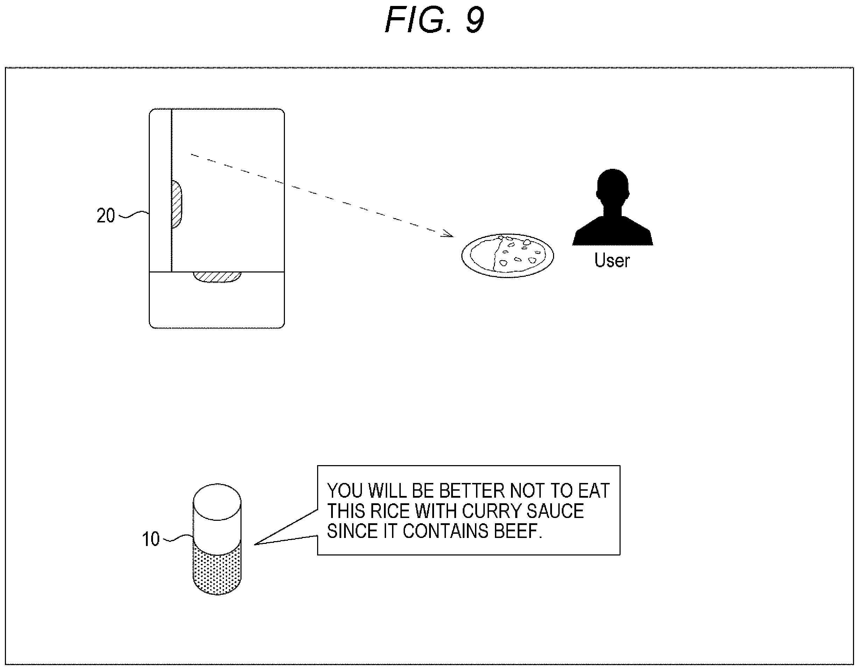

In this first specific example, as illustrated in Fig. 9, for example, when the daughter (U003) takes the rice with curry sauce out of the refrigerator 20, the food information management and presentation unit 132 refers to the food information table 621, thereby specifying that the rice with curry sauce was made using beef as its ingredient. In addition, the food information management and presentation unit 132 refers to the user information table 141, thereby specifying that the foodstuffs which the daughter (U003) cannot eat include beef. As a result, the food information management and presentation unit 132 outputs a response for urging the daughter (U003) to pay attention to the foodstuff which she cannot eat.

### • Second specific example of attention inviting response

U: (Someone takes deep-fried breaded cutlet of beef out of refrigerator 20)
S: "You will be better not to eat this deep-fried breaded cutlet of beef since it contains allergic foodstuff, egg."

In this second specific example, for example, when the son (U004) takes the deep-fried breaded cutlet of beef out of the refrigerator 20, the food information management and presentation unit 132 refers to the food information table 621, thereby specifying that the deep-fried breaded cutlet of beef was made using egg as its ingredient. The food information management and presentation unit 132 refers to the user information table 141, thereby specifying that the son (U004) has an allergy to egg. As a result, the food information management and presentation unit 132 outputs a response for urging the son (U004) to pay attention to the foodstuff to which he has an allergy.

Referring back to Fig. 8 again, in a case where it is determined by the determination processing task in step S54 that the record does not include the ingredient information or in a case where it is determined by the determination processing task in step S55 that the ingredient information contains no foodstuff which the user who takes the food out of the refrigerator 20 cannot eat, the processing proceeds to step S57.

In step S57, the dialogue control unit 112 determines whether to recognize that the user utters a food. Here, for example, the dialogue control unit 112 previously registers therein utterance patterns such as "Can I eat this?" and "When was this rice with curry sauce made?", and recognizes an utterance to a food by pattern matching.

In a case where it is determined by the determination processing task in step S57 that an utterance to a food is recognized, the processing proceeds to step S58.

In step S58, the dialogue control unit 112 determines whether the utterance contains a question about a cooking date and time. In a case where it is determined by the determination processing task in step S58 that the utterance contains a question about a cooking date and time, the processing proceeds to step S59.

In step S59, the food information management and presentation unit 132 acquires cooking date and time information from the record of the relevant food (the food having the specified food ID) stored in the food information table 621.

When the processing task in step S59 ends, the processing proceeds to step S60. Note that in a case where it is determined by the determination processing task in step S58 that the utterance does not contain a question about a cooking date and time, the processing task in step S59 is skipped, and the processing proceeds to step S60.

In step S60, the dialogue control unit 112 determines whether the utterance contains a question about an ownership right. In a case where it is determined by the determination processing task in step S60 that the utterance contains a question about an ownership right, the processing proceeds to step S61.

In step S61, the food information management and presentation unit 132 acquires ownership right information from the record of the relevant food (the food having the specified food ID) stored in the food information table 621.

When the processing task in step S61 ends, the processing proceeds to step S62. Note that in a case where it is determined by the determination processing task in step S60 that the utterance does not contain a question about an ownership right, the processing task in step S61 is skipped, and the processing proceeds to step S62.

In step S62, the food information management and presentation unit 132 outputs a response concerning the food, on the basis of the acquired information.

In the foregoing determination processing tasks, for example, in a case where an utterance to a food is recognized ("Yes" in S57) and it is determined that the utterance contains a question about a cooking date and time and a question about an ownership right ("Yes" in S58, "Yes" in S60), the food information management and presentation unit 132 acquires cooking date and time information and ownership right information.

Therefore, the food information management and presentation unit 132 outputs a response containing an answer about the cooking date and time and ownership right of the food taken out of the refrigerator 20, on the basis of the information regarding the user who takes the food out of the refrigerator 20, the information regarding the food taken out of the refrigerator 20, the cooking date and time information, and the ownership right information.

The following describes a specific example of a dialogue response at the time when a food is taken out of the refrigerator 20. Note that, here, "S" represents a dialogue system, and "U" represents a user.

### • First specific example of dialogue response

U: (Someone takes rice with curry sauce out of refrigerator 20)
U: "When was this rice with curry sauce made? Can I eat this?"
S: "Mom said that I made this rice with curry sauce for Dad today, but he said to me anyone can eat it."

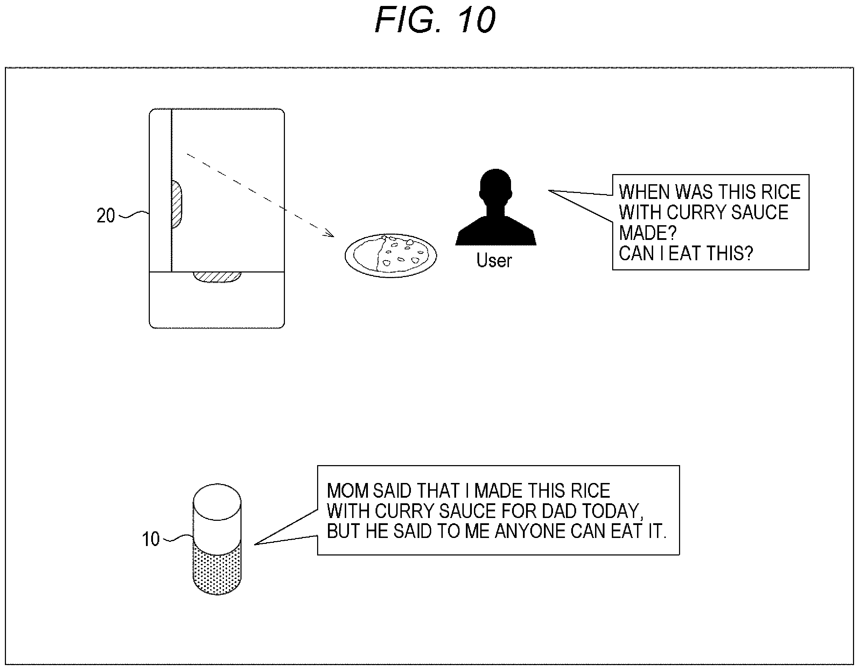

In this first specific example, as illustrated in Fig. 10, for example, in a case where the son (U004) makes an utterance "When was this rice with curry sauce made? Can I eat this?" when taking the rice with curry sauce out of the refrigerator 20, this utterance contains a question about a cooking date and time and a question about an ownership right. Therefore, the food information management and presentation unit 132 outputs a response according to the cooking date and time information and ownership right information included in the relevant record.

However, it is assumed in this first specific example that the mother (U002) made an utterance "Dad said that anyone can eat it." at the time when she puts the rice with curry sauce in the refrigerator 20, for example.

### • Second specific example of dialogue response

U: (Someone takes rice with curry sauce out of refrigerator 20)
U: "Whose is this rice with curry sauce? Can I still eat this?"
S: "This rice with curry sauce is for Dad's supper, and can be eaten for another three days."

In this second specific example, for example, in a case where the son (U004) makes an utterance "Whose is this rice with curry sauce? Can I still eat this?" when taking the rice with curry sauce out of the refrigerator 20, this utterance contains information regarding a cooking date and time and an ownership right. Therefore, the food information management and presentation unit 132 outputs a response according to the cooking date and time information and ownership right information included in the relevant record (X005).

Furthermore, in the foregoing determination processing tasks, for example, in a case where an utterance to a food is recognized ("Yes" in S57) and the utterance does not contain a question about an ownership right ("Yes" in S58, "No" in S60), the food information management and presentation unit 132 outputs a response containing an answer about the cooking date and time of the food taken out of the refrigerator 20, on the basis of the cooking date and time information.

### • Third specific example of dialogue response

U: (Someone takes rice with curry sauce out of refrigerator 20)
U: "When was this rice with curry sauce made?"
S: "This rice with curry sauce was made at 6 pm yesterday."

Moreover, in the foregoing determination processing tasks, for example, in a case where an utterance to a food is recognized ("Yes" in S57) and the utterance does not contain a question about a cooking date and time ("No" in S58, "Yes" in S60), the food information management and presentation unit 132 outputs an answer containing information regarding the ownership right of the food taken out of the refrigerator 20, on the basis of the ownership right information.

### • Fourth specific example of dialogue response

U: (Someone takes rice with curry sauce out of refrigerator 20)
U: "Can I eat this?"
S: "This rice with curry sauce is for Dad's supper."

Note that, here, the user utters a question about a cooking date and time and a question about an ownership right, as an example. For example, the user may utter a question about the other items, such as "consume-by date" and "ingredient", of the food information table 621.

Referring back to Fig. 8, in a case where the processing task in step S56 or S62 ends or in a case where it is determined by the determination processing task in step S57 that the dialogue control unit 112 does not recognize an utterance to a food ("No" in S57), the taking-out processing illustrated in Fig. 8 ends.

The foregoing description concerns the flow of the taking-out processing. In this taking-out processing, the processing unit 100 of the agent device 10 manages, as information regarding a food (e.g., a cooked food such as rice with curry sauce) preserved in the refrigerator 20 corresponding to a preservation cabinet, food information (the food information table 621) containing ownership right information regarding an ownership right for each food, generates, in a case where information from an identified user (details of an utterance) contains the information regarding the ownership right, a response (a dialogue response) according to the ownership right information regarding a desired food of the user, on the basis of the managed food information, and outputs the generated response.

Note that in the foregoing description, (the processing unit 200 of) the refrigerator 20 carries out the processing tasks in steps S51 and S53, and (the processing unit 100 of) the agent device 10 carries out the processing tasks in steps S52 and S54 to S62. However, the processing unit 100 and the processing unit 200 may carry out any processing tasks. Furthermore, (the processing unit 600 of) the server 60 may carry out some of the processing tasks.

Furthermore, a response (such as an attention inviting response or a dialogue response) exemplified herein is an utterance response (a voice response) of reading a text aloud using Text-To-Speech (TTS). The response may alternatively be a screen response of displaying a graphical user interface (GUI), a combination of the utterance response with the screen response, and the like.

Moreover, the utterance response and the screen response may be output from, for example, (the output unit 202 of) the refrigerator 20 rather than (the output unit 102 of) the agent device 10. Alternatively, the utterance response and the screen response may be output from a home electric appliance 30 such as a smartphone or a television receiver.

Note that in a case where a plurality of devices is capable of outputting a response, the sensor unit 105 or the like may detect a position, an orientation, and the like of a user who takes a food out of the refrigerator 20, and a device according to a result of the detection may output a response. Here, for example, a response can be output from a device nearest to a user, selected from among devices placed in a direction to which his/her face is directed. On the other hand, a plurality of devices may output a response. For example, (the output unit 102 of) the agent device 10 outputs an utterance response, while (the output unit 202 of) the refrigerator 20 outputs a screen response.

Meanwhile, there are no descriptions about a cooking date and time, a consume-by date, and ingredients with regard to foods preserved in the refrigerator 20, particularly cooked foods such as leftovers and premade foods. Therefore, for example, such foods are sometimes unknown as to when they were made or for whom (in the family) the foods are prepared.

Furthermore, there are no descriptions about a consume-by date, a cooking date and time, and the like with regard to unpackaged foods such as cooked foods, vegetables, and fruits. Therefore, a user is sometimes undecided whether to eat such a food.

According to the present technology, in order to solve this problem, a response concerning a food preserved in the refrigerator 20 can be output more appropriately using information regarding foods, the information being acquired from the agent device 10, the refrigerator 20, and the like. Therefore, information regarding a food that is unknown as to who is allowed to eat, when it was made, what ingredients were used, or the like can be presented to a user through a device such as the agent device 10 or the refrigerator 20. Furthermore, information regarding a food can be presented to a user without forcing the user to perform complicated operations.

Note that Patent Documents 1 to 3 described above each disclose a technology in preserving a food in a refrigerator, but have no description about the ownership right information described above. Therefore, it is necessary for a user to forcibly perform complicated operations or to make an utterance while being conscious of the time when he/she puts a food in a refrigerator.

### <2. Modifications>

### (Another configuration of system)

In the foregoing description, the processing unit 100 of the agent device 10 on the local side includes the person identification unit 111 and the dialogue control unit 112. Alternatively, all or some of the functions of the person identification unit 111 and dialogue control unit 112 may be incorporated in (the processing unit 600 of) the server 60 on the cloud side.

Furthermore, both or one of the person identification unit 111 and the dialogue control unit 112 in (the processing unit 100 of) the agent device 10 may be incorporated in (the processing unit 200 of) the refrigerator 20. Alternatively, all or some of the open/close detection unit 211 to the object position detection unit 214 in (the processing unit 200 of) the refrigerator 20 may be incorporated in (the processing unit 100 of) the agent device 10 or (the processing unit 600 of) the server 60.

That is, the functions of each of the processing unit 100 in the agent device 10, the processing unit 200 in the refrigerator 20, and the processing unit 600 in the server 60 may be provided to any of the processing unit 100, the processing unit 200, or the processing unit 600.

### (Another example of user information table)

In the foregoing description, an example of the user information table 141 that stores user information is illustrated in Fig. 6; however, another configuration may be used.

For example, the items of the user information table 141 illustrated in Fig. 6 are an example. The user information table 141 does not necessarily have all the items, and may have another item additionally. Specifically, for example, items such as a foodstuff which a user likes, a foodstuff which a user does not like, a food which a user intends to take for his/her physical condition management, and the like are set for each user, and information regarding such an item may be registered and used in outputting a response. Furthermore, multiple kinds of information may be registered for the items such as "designation", "allergy", and "foodstuff which user cannot eat".

Furthermore, a unique ID is allocated as a user ID to each person identified by the person identification unit 111. Registration of user information excluding a user ID may of course be performed by an input operation to the agent device 10. In addition to this, for example, the registration may be performed by an input operation to an external application to be executed in a device cooperating with the agent device 10.

Specifically, for example, an information terminal such as a smartphone of a user may cooperate with the agent device 10 such that user information (e.g., information regarding a designation, a foodstuff, and the like) can be registered later on a Web application to be executed in the information terminal.

Furthermore, the registered user information is stored in the user information table 141. The registered user information can be updated or deleted. For example, in a case where a certain user can eat a foodstuff which he/she could not eat before or becomes a vegetarian, it is only required to update the user information at that timing.

Note that the user information table 141 may be stored in and managed by, for example, (the storage unit 203 of) the refrigerator 20, (the storage unit 603 of) the server 60, a dedicated management apparatus (not illustrated) connected to the home network 50, or the like in addition to (the storage unit 103 of) the agent device 10.

### (Another example of food information table)

In the foregoing description, an example of the food information table 621 that stores food information is illustrated in Fig. 7; however, another configuration may be used.

For example, the items of the food information table 621 illustrated in Fig. 7 are an example. The food information table 621 does not necessarily have all the items, and may have another item additionally. Specifically, for example, items such as a date and time when a food is taken out of the refrigerator 20, an amount of food for how many people, and the like are set for each food, and information regarding such an item may be registered and used in outputting a response.

Furthermore, for example, multiple kinds of information may be registered for the items such as "ownership right". Specifically, for example, in a case where the mother (U002) prepared a food (e.g., deep-fried breaded cutlet of beef) for the father (U001) and the son (U004) and preserved it in the refrigerator 20, the father (U001) and the son (U004) are registered as an ownership right of the food on the basis of the details of an utterance, and the like.

Furthermore, the registered food information is stored in the food information table 621. The registered food information can be updated or deleted.

Specifically, for example, in a case where the daughter (U003) hands over a food (e.g., pudding) whose ownership right is owned by the daughter (U003) to the son (U004), the ownership right of the food is transferred to the son (U004). In a case where the transfer of the food is recognized on the basis of the details of an utterance, and the like, it is only required to update the details of the ownership right information. Furthermore, for example, in a case where a food is taken out of the refrigerator 20, the record of the food may be deleted after a lapse of a predetermined period, or the like.

Note that the food information table 621 may be stored in and managed by, for example, (the storage unit 103 of) the agent device 10, (the storage unit 203 of) the refrigerator 20, a dedicated management apparatus (not illustrated) connected to the home network 50, or the like in addition to (the storage unit 603 of) the server 60.

### (Management and presentation of recipe information)

In the foregoing description, (the processing unit 100 of) the agent device 10 includes the recipe information management and presentation unit 133. However, this function may be provided by an external application to be executed in a device (e.g., an information terminal such as a smartphone) cooperating with the agent device 10.

For example, in the agent device 10 or a device cooperating with the agent device 10, the function of the recipe information management and presentation unit 133 is achieved by an application to be provided as the dialogue application 122, and recipe information such as how to cook a dish, foodstuffs, processes, and a preservation period can be presented to a user.

Furthermore, in a case where the user does cooking in accordance with the presented recipe information, the recipe information management and presentation unit 133 holds information such as a recipe (e.g., a dish name, ingredients, etc.) and a cooking date and time. Then, when the user puts the prepared dish (the food) in the refrigerator 20, the food information management and presentation unit 132 (or the recipe information management and presentation unit 133) can register the held information such as the recipe and the cooking date and time in the food information table 621 as a record of the food put in the refrigerator 20.

Furthermore, in a case where, for example, a cooking device such as a microwave oven or an electric oven is used as the home electric appliance 30 connected to the home network 50 to which the agent device 10 is also connected, (the recipe information management and presentation unit 133 of) the agent device 10 may cooperate with the cooking device to acquire information such as a cooking date and time and a dish name. Specifically, for example, in a case where gratin is made using an electric oven, the agent device 10 may cooperate with the electric oven to acquire information such as a dish name, that is, gratin, and a cooking date and time of gratin.

### (How to specify putting-in/taking-out person)

In the foregoing description, as the method of specifying a person who puts/takes a food in/out of the refrigerator 20, the putting-in/taking-out person is specified using the person identification unit 111 of the agent device 10. However, this method is employed on the assumption that an open/closed portion of the door of the refrigerator 20 falls within a range where the agent device 10 can detect the person.

On the other hand, as the method of specifying the putting-in/taking-out person, the putting-in/taking-out person may be specified by any method in addition to the method of specifying the putting-in/taking-out person, using the person identification unit 111. For example, the putting-in/taking-out person may be specified on the basis of information detected by an external device such as a camera installed on the ceiling of a kitchen where the agent device 10 and the refrigerator 20 are placed.

### (Another example of response at time when food is taken out of refrigerator)

In the foregoing description, the specific examples of the responses output by the processing tasks in steps S56 and S62 illustrated in Fig. 8 are exemplified with reference to, for example, Figs. 9 and 10. Various responses can be output as the responses.

Specifically, in a case where information regarding an answer to a question in an utterance cannot be obtained, for example, a response indicating who put the food in the refrigerator 20 may be output. Here, for example, a response indicating "Elder sister put it in the refrigerator last night" or the like is output.

Alternatively, in a case where information regarding an answer to a question cannot be obtained, a first response for inquiring information regarding a food taken out of the refrigerator 20 of a user who takes the food out of the refrigerator 20 may be output, and information estimated from food information, recipe information, and the like registered in the food information table 621 in the past may be output as a second response on the basis of an answer of the user to the first response.

Furthermore, in a case where a user takes a food containing a foodstuff which he/she cannot eat out of the refrigerator 20, a response (an attention inviting response) may be output without an inquiry from the user. In a case where a user takes a food containing no foodstuff which he/she cannot eat out of the refrigerator 20, for example, information regarding whether or not to output a response only in a case where the user makes an inquiry may be registered as user information, and a response output frequency may be changed in accordance with settings for each user. Alternatively, a reaction (e.g., a face expression, a reply, a tone, etc.) of a user upon output of a response may be detected by the sensor unit 105, the voice input unit 113, or the like, and a subsequent response output frequency may be changed in accordance with a result of the detection.

Moreover, for example, in a case where a certain user (e.g., the father) takes a food out of the refrigerator 20, when he intends to take a food (e.g., deep-fried breaded cutlet of beef) out of the refrigerator 20 although a food (e.g., rice with curry sauce) whose ownership right is owned by the father is put in the preservation unit 206, information, such as a food whose ownership right is owned by the father and a consume-by date of the food, may be output in the form of a response "Rice with curry sauce prepared for Dad is preserved, and it is better to eat it today.".

### <3. Configuration of system>

The foregoing description concerns an embodiment of the present technology. As described above, the agent device 10 serving as an information processing apparatus to which the present technology is applied includes the processing unit 100, the input unit 101, and the output unit 102. These constituent elements are embodied with one or more information processing apparatuses. Hereinafter, a description will be given of an example of a combination of an information processing apparatus that embodies the agent device 10 serving as a system, with more specific examples.

Note that this information processing apparatus corresponds to the agent device 10 or refrigerator 20 described above. Hereinafter, therefore, this information processing apparatus is also described as an information processing apparatus 10 or an information processing apparatus 20. Furthermore, the following configuration basically refers to a configuration of an information processing apparatus 10; however, similar things may hold true for a configuration of an information processing apparatus 20, and a processing unit 100, an input unit 101, and an output unit 102 respectively correspond to a processing unit 200, an input unit 201, and an output unit 202.

### (First example)

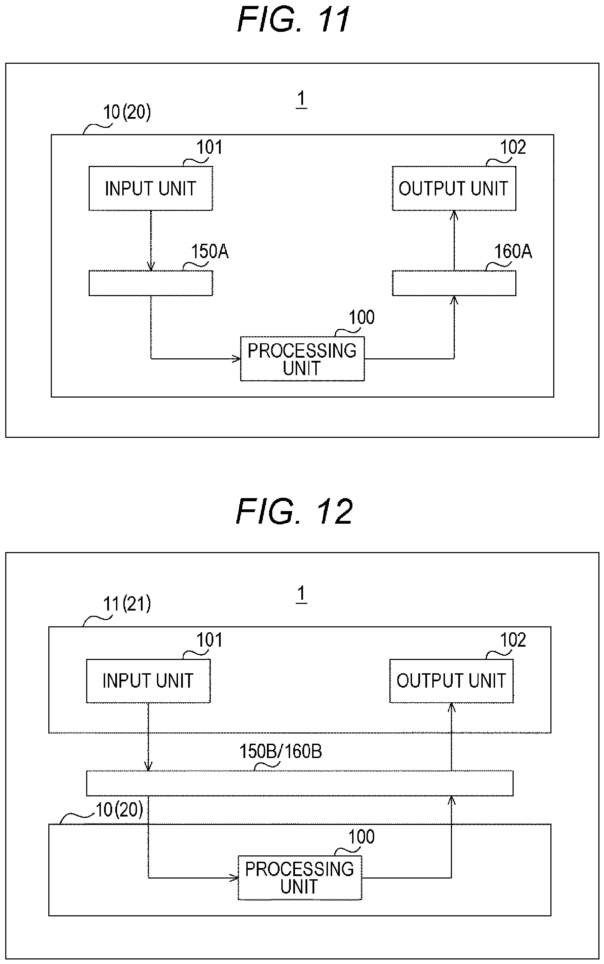

Fig. 11 illustrates a first example of a configuration of a system to which the present technology is applied in accordance with an embodiment.

In Fig. 11, a system 1 includes an information processing apparatus 10 (or an information processing apparatus 20). A processing unit 100, an input unit 101, and an output unit 102 are each embodied in the information processing apparatus 10. The information processing apparatus 10 may be a terminal apparatus or a server as will be described later.

In this first example, the information processing apparatus 10 may be a stand-alone apparatus that does not communicate with an external apparatus via a network in order to achieve functions according to an embodiment of the present technology. Note that the information processing apparatus 10 may communicate with an external apparatus for the purpose of other functions and, accordingly, is not necessarily a stand-alone apparatus.

Both an interface 150A between the input unit 101 and the processing unit 100 and an interface 160A between the processing unit 100 and the output unit 102 may be an intra-apparatus interface.

In the first example, the information processing apparatus 10 serves as, for example, a terminal apparatus. In this case, the input unit 101 may include an input apparatus, a sensor, software for acquiring information from an external service, and the like. For example, software for acquiring information from an external service acquires data from application software of service carried out on a terminal apparatus.

The processing unit 100 is embodied in such a manner that a processor or a processing circuit of a terminal apparatus operates in accordance with a program stored in a memory or a storage apparatus. The output unit 102 may include an output apparatus, a control apparatus, software for providing an external service with information, and the like. For example, software for providing an external service with information is capable of providing application software of service carried out on a terminal apparatus with information.

Alternatively, in the first example, the information processing apparatus 10 may be a server. In this case, the input unit 101 may include software for acquiring information from an external service. For example, software for acquiring information from an external service acquires data from a server of an external service (or may acquire information from the information processing apparatus 10).

The processing unit 100 is embodied in such a manner that a processor of a terminal apparatus operates in accordance with a program stored in a memory or a storage apparatus. The output unit 102 may include software for providing an external service with information, and the like. For example, software for providing an external service with information provides a server of an external service with information (or may provide the information processing apparatus 10 with information).

### (Second example)

Fig. 12 illustrates a second example of a configuration of a system to which the present technology is applied in accordance with an embodiment.

In Fig. 12, a system 1 includes information processing apparatuses 10 and 11 (or information processing apparatuses 20 and 21). A processing unit 100 is embodied in the information processing apparatus 10. On the other hand, an input unit 101 and an output unit 102 are embodied in the information processing apparatus 11.

The information processing apparatus 10 communicates with the information processing apparatus 11 via a network in order to achieve functions according to an embodiment of the present technology. Both an interface 150B between the input unit 101 and the processing unit 100 and an interface 160B between the processing unit 100 and the output unit 102 may be an inter-apparatus communication interface.

In the second example, the information processing apparatus 11 serves as, for example, a terminal apparatus. In this case, the input unit 101 may include an input apparatus, a sensor, software for acquiring information from an external service, and the like, as in the foregoing first example. The output unit 102 may also include an output apparatus, a control apparatus, software for providing an external service with information, and the like, as in the foregoing first example.

Alternatively, the information processing apparatus 11 may be a server for exchanging information with an external service. In this case, the input unit 101 may include software for acquiring information from an external service. Furthermore, the output unit 102 may include software for providing an external service with information.

Furthermore, in the second example, the information processing apparatus 10 serves as a server or a terminal apparatus. The processing unit 100 is embodied in such a manner that a processor or a processing circuit of the information processing apparatus 10 operates in accordance with a program stored in a memory or a storage apparatus.

The information processing apparatus 10 may be, for example, a dedicated apparatus serving as a server. In this case, the information processing apparatus 10 may be installed in a data center or the like or may be installed in a home.

Alternatively, the information processing apparatus 10 can be used as a terminal apparatus with regard to other functions. With regard to the functions according to an embodiment of the present technology, the information processing apparatus 10 may be an apparatus that does not embody the input unit 101 and the output unit 102. In the following example, the information processing apparatus 10 may be a server or a terminal apparatus in the foregoing sense.

It is assumed herein that, as an example, the information processing apparatus 11 is a wearable device and the information processing apparatus 10 is a mobile device connected to the wearable device by Bluetooth (registered trademark) or the like.

In a case where the wearable device accepts an operation input by a user (the input unit 101), the mobile device carries out processing on the basis of a request transmitted on the basis of the operation input (the processing unit 100), and the wearable device outputs a result of the processing (the output unit 102), it can be said that the wearable device functions as the information processing apparatus 11 in the foregoing second example and the mobile device functions as the information processing apparatus 10 in the foregoing second example.

### (Third example)

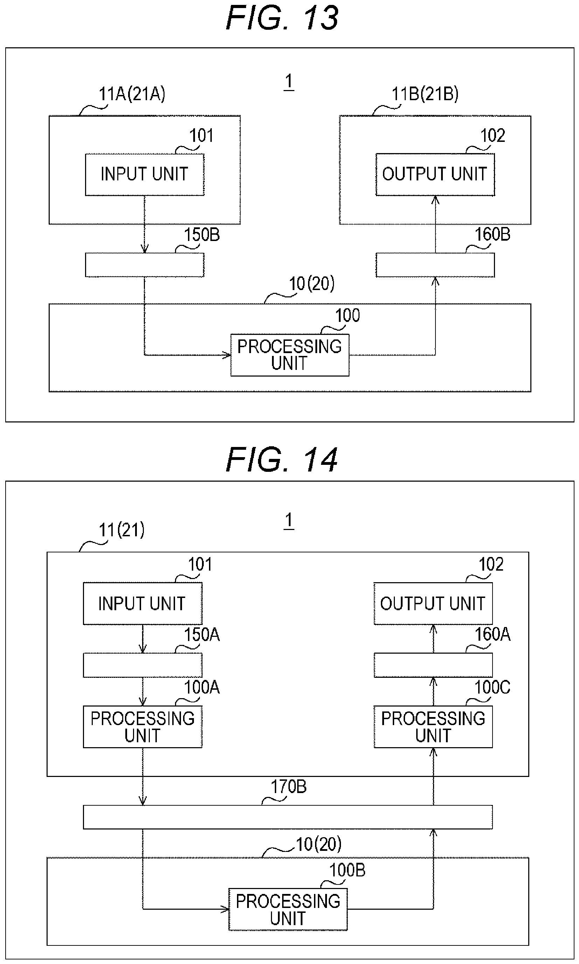

Fig. 13 illustrates a third example of a configuration of a system to which the present technology is applied in accordance with an embodiment.

In Fig. 13, a system 1 includes information processing apparatuses 10, 11A, and 11B (information processing apparatuses 20, 21A, and 21B). A processing unit 100 is embodied in the information processing apparatus 10. Furthermore, an input unit 101 is embodied in the information processing apparatus 11A. An output unit 102 is embodied in the information processing apparatus 11B.

The information processing apparatus 10 communicates with each of the information processing apparatuses 11A and 11B via a network in order to achieve functions according to an embodiment of the present technology. Both an interface 150B between the input unit 101 and the processing unit 100 and an interface 160B between the processing unit 100 and the output unit 102 may be an inter-apparatus communication interface.

In the third example, however, since the information processing apparatus 11A and the information processing apparatus 11B are separate apparatuses, the interfaces 150B and 160B may be different in type from each other.

In the third example, the information processing apparatuses 11A and 11B each serve as, for example, a terminal apparatus. In this case, the input unit 101 may include an input apparatus, a sensor, software for acquiring information from an external service, and the like, as in the foregoing first example. The output unit 102 may also include an output apparatus, a control apparatus, software for providing an external service with information, and the like, as in the foregoing first example.

Alternatively, one of or both the information processing apparatus 11A and the information processing apparatus 11B may be a server for acquiring information from an external service and for providing the external service with information. In this case, the input unit 101 may include software for acquiring information from an external service. Furthermore, the output unit 102 may include software for providing an external service with information.

Furthermore, in the third example, the information processing apparatus 10 serves as a server or a terminal apparatus, as in the foregoing second example. The processing unit 100 is embodied in such a manner that a processor or a processing circuit of the information processing apparatus 10 operates in accordance with a program stored in a memory or a storage apparatus.

In the foregoing third example, the information processing apparatus 11A that embodies the input unit 101 and the information processing apparatus 11B that embodies the output unit 102 are separate apparatuses. Accordingly, for example, it is possible to achieve such a function that a result of processing based on an input acquired by the information processing apparatus 11A, which is a terminal apparatus possessed or used by a first user, is output from the information processing apparatus 11B which is a terminal apparatus possessed or used by a second user different from the first user.

Furthermore, it is possible to achieve such a function that a result of processing based on an input acquired by the information processing apparatus 11A, which is a terminal apparatus possessed or used by a first user, is output from the information processing apparatus 11B which is a terminal apparatus not at hand of the first user at that time (e.g., a terminal apparatus left at home while the first user is not at home).

Alternatively, each of the information processing apparatus 11A and the information processing apparatus 11B may be a terminal apparatus to be possessed or used by the same user. For example, in a case where the information processing apparatuses 11A and 11B are wearable devices to be mounted to different sites of a user or in a case where the information processing apparatuses 11A and 11B are respectively a wearable device and a mobile device to be used in a combined manner, it is possible to provide the user with cooperative functions of these devices.

### (Fourth example)

Fig. 14 illustrates a fourth example of a configuration of a system to which the present technology is applied in accordance with an embodiment.

In Fig. 14, a system 1 includes information processing apparatuses 10 and 11 (information processing apparatuses 20 and 21). In the fourth example, a processing unit 100 is embodied in the information processing apparatus 10 and the information processing apparatus 11 in a distributed manner. On the other hand, an input unit 101 and an output unit 102 are embodied in the information processing apparatus 11.

The information processing apparatus 10 communicates with the information processing apparatus 11 via a network in order to achieve functions according to an embodiment of the present technology.

As described above, in the fourth example, the processing unit 100 is embodied in the information processing apparatus 10 and the information processing apparatus 11 in a distributed manner. More specifically, the processing unit 100 includes a processing unit 100B embodied in the information processing apparatus 10 and processing units 100A and 100C embodied in the information processing apparatus 11.

The processing unit 100A carries out processing on the basis of information received from the input unit 101 via an interface 150A, and provides the processing unit 100B with a result of the processing. In this sense, it can be said that the processing unit 100A carries out pre-processing.

On the other hand, the processing unit 100C carries out processing on the basis of information received from the processing unit 100B, and provides the output unit 102 with a result of the processing via an interface 160A. In this sense, it can be said that the processing unit 100C carries out post-processing.

Note that, in the illustrated example, both the processing unit 100A that carries out the pre-processing and the processing unit 100C that carries out the post-processing are illustrated. In practice, there may be only one of them.

That is, the information processing apparatus 11 embodies the processing unit 100A that carries out the pre-processing, but does not embody the processing unit 100C that carries out the post-processing, and information from the processing unit 100B may be given to the output unit 102 as it is. Likewise, the information processing apparatus 11 may embody the processing unit 100C that carries out the post-processing, but does not necessarily embody the processing unit 100A that carries out the pre-processing.

An interface 170B is interposed between the processing unit 100A and the processing unit 100B and between the processing unit 100B and the processing unit 100C. The interface 170B is an inter-apparatus communication interface.

On the other hand, in a case where the information processing apparatus 11 embodies the processing unit 100A, the interface 150A is an intra-apparatus interface. Likewise, in a case where the information processing apparatus 11 embodies the processing unit 100C, the interface 160A is an intra-apparatus interface.

Note that the foregoing fourth example is similar to the foregoing second example except that one of or both the processing unit 100A and the processing unit 100C is or are embodied by a processor or a processing circuit of the information processing apparatus 11. In other words, the information processing apparatus 11 serves as a server for exchanging information with a terminal apparatus or an external service. Furthermore, the information processing apparatus 10 serves as a server or a terminal apparatus.

### <4. Configuration of computer>

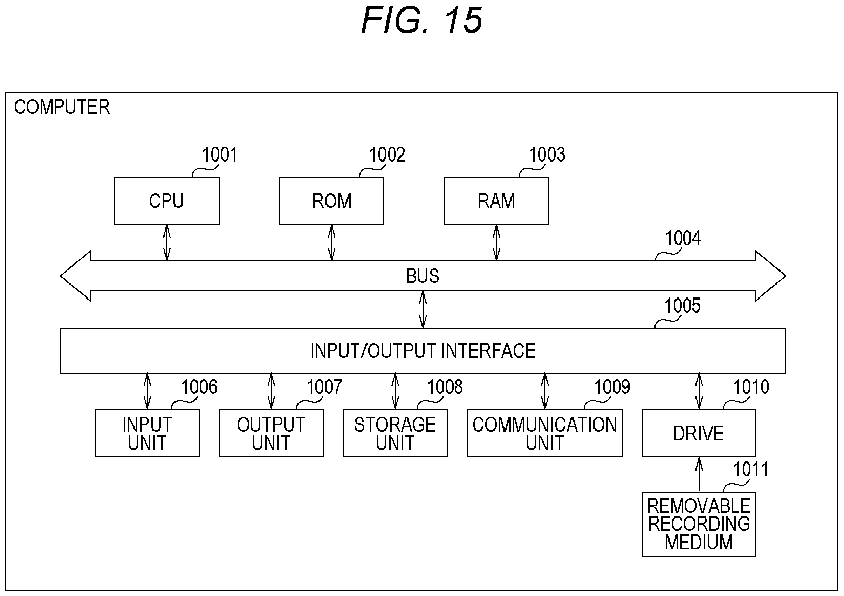

The foregoing series of processing tasks (e.g., the putting-in processing in Fig. 5, the taking-out processing in Fig. 8) can be carried out by hardware and can also be carried out by software. In a case where the series of processing tasks is carried out by software, a program constituting the software is installed in a computer of each apparatus. Fig. 15 is a block diagram that illustrates a configuration example of hardware in a computer that installs therein the program to carry out the foregoing series of processing tasks.

In the computer illustrated in Fig. 15, a central processing unit (CPU) 1001, a read only memory (ROM) 1002, and a random access memory (RAM) 1003 are interconnected via a bus 1004. Moreover, an input/output interface 1005 is connected to the bus 1004. An input unit 1006, an output unit 1007, a recording unit 1008, a communication unit 1009, and a drive 1010 are connected to the input/output interface 1005.

The input unit 1006 includes a microphone, a keyboard, a mouse, and the like. The output unit 1007 includes a speaker, a display, and the like. The recording unit 1008 includes a hard disk, a nonvolatile memory, and the like. The communication unit 1009 includes a network interface and the like. The drive 1010 drives a removable recording medium 1011 such as a magnetic disk, an optical disk, a magneto-optical disk, or a semiconductor memory.

In the computer configured as described above, the CPU 1001 loads a program recorded in the ROM 1002 or recording unit 1008, onto the RAM 1003 via the input/output interface 1005 and the bus 1004 to execute the program, thereby carrying out the foregoing series of processing tasks.

The program to be executed by the computer (the CPU 1001) can be provided while being recorded in, for example, the removable recording medium 1011 as a package medium or the like. Furthermore, the program can be provided via a wired or wireless transmission medium such as a local area network, the Internet, or digital satellite broadcasting.

In the computer, the program can be installed in the recording unit 1008 via the input/output interface 1005 in such a manner that the removable recording medium 1011 is mounted to the drive 1010. Furthermore, the program can be received at the communication unit 1009 via a wired or wireless transmission medium, and can be installed in the recording unit 1008. In addition, the program can be previously installed in the ROM 1002 or the recording unit 1008.

Here, in the present specification, the series of processing tasks to be carried out by the computer in accordance with the program is not necessarily carried out in a time series manner in accordance with the order described in the flowchart. That is, the series of processing tasks to be carried out by the computer in accordance with the program includes processing tasks to be carried out in parallel or independently of one another (e.g., parallel processing tasks or processing tasks by an object). Furthermore, the program may be processed by a single computer (processor) or may be processed by a plurality of computers in a distributed manner.

Note that embodiments of the present technology are not limited to the foregoing embodiments, and various variations can be made without departing from the gist of the present technology.

Furthermore, the respective steps in the foregoing series of processing tasks can be carried out by a single apparatus or can be carried out by a plurality of apparatuses with the steps divided among the plurality of apparatuses. Moreover, in a case where a single step includes a plurality of processing tasks, the plurality of processing tasks included in the single step can be carried out by a single apparatus or can be carried out by a plurality of apparatuses with the plurality of processing tasks divided among the plurality of apparatuses.

Note that the present technology can adopt the following configurations.

(1) An information processing apparatus including
   a processing unit configured to:
   manage, as information regarding a food preserved in a preservation cabinet, food information containing ownership right information regarding an ownership right for each food;
   generate, in a case where information from an identified user contains the information regarding the ownership right, a response according to the ownership right information regarding a desired food of the user, on the basis of the managed food information; and
   output the generated response.
(2) The information processing apparatus as recited in (1), in which
   when the user puts a desired food in the preservation cabinet, the processing unit registers the food information regarding the food put in the preservation cabinet, and
   when the user takes a desired food out of the preservation cabinet, the processing unit generates a response according to the ownership right information regarding the food taken out of the preservation cabinet.
(3) The information processing apparatus as recited in (2), in which
   the food information contains ingredient information regarding an ingredient of the food, and
   in a case where the food taken out of the preservation cabinet contains a foodstuff which the user cannot eat, the processing unit generates a response according to information regarding the foodstuff, on the basis of the ingredient information.
(4) The information processing apparatus as recited in (3), in which
   the processing unit manages, as information regarding the user, user information containing information regarding a foodstuff which the user cannot eat for each user, and
   in a case where the food taken out of the preservation cabinet contains a foodstuff which the user cannot eat, the processing unit generates a response according to information regarding the foodstuff, on the basis of the ingredient information and the user information.
(5) The information processing apparatus as recited in any of (2) to (4), in which
   the information from the user contains information obtained from an utterance of the user.
(6) The information processing apparatus as recited in (5), in which
   in a case where the utterance of the user contains information regarding an ownership right at a time when the user puts a desired food in the preservation cabinet, the processing unit adds ownership right information according to the ownership right to the food information regarding the food put in the preservation cabinet.
(7) The information processing apparatus as recited in (5) or (6), in which
   in a case where the utterance of the user contains information regarding an ownership right at a time when the user takes a desired food out of the preservation cabinet, the processing unit acquires, from the food information, the ownership right information regarding the food taken out of the preservation cabinet, and
   the processing unit generates the response on the basis of the acquired ownership right information.
(8) The information processing apparatus as recited in any of (5) to (7), in which
   the food information further contains cooking date and time information regarding a cooking date and time of the food,
   in a case where the utterance of the user contains information regarding the cooking date and time, the processing unit acquires, from the food information, the cooking date and time information regarding the food taken out of the preservation cabinet, and
   the processing unit generates the response on the basis of the acquired ownership right information and cooking date and time information.
(9) The information processing apparatus as recited in any of (1) to (8), in which
   the processing unit acquires recipe information regarding a recipe of a dish, and
   the processing unit adds information according to the acquired recipe information to the food information.
(10) The information processing apparatus as recited in any of (1) to (9), in which
   the food information contains various attributes concerning each food for each food.
(11) The information processing apparatus as recited in any of (1) to (10), in which
   the processing unit outputs a voice response as the response.
(12) The information processing apparatus as recited in any of (1) to (11), in which
   the food includes a cooked food.
(13) The information processing apparatus as recited in any of (1) to (12), in which
   the preservation cabinet includes a refrigerator.
(14) An information processing method including:
   causing an information processing apparatus to manage, as information regarding a food preserved in a preservation cabinet, food information containing ownership right information regarding an ownership right for each food;
   causing the information processing apparatus to generate, in a case where information from an identified user contains the information regarding the ownership right, a response according to the ownership right information regarding a desired food of the user, on the basis of the managed food information; and
   causing the information processing apparatus to output the generated response.
(15) A food preservation apparatus including:
   a preservation unit configured to preserve a food; and
   a processing unit configured to perform processing regarding the food,
   in which
   the processing unit manages, as information regarding the food preserved in the preservation unit, food information containing ownership right information regarding an ownership right for each food,
   the processing unit generates, in a case where information from an identified user contains the information regarding the ownership right, a response according to the ownership right information regarding a desired food of the user, on the basis of the managed food information, and
   the processing unit outputs the generated response.

### REFERENCE SIGNS LIST

- 10: Agent device
- 20: Refrigerator
- 30, 30-1 to 30-N: Home electric appliance
- 40: Router
- 50: Home network
- 60: Server
- 70: Internet
- 100: Processing unit
- 101: Input unit
- 102: Output unit
- 103: Storage unit
- 104: Communication unit
- 105: Sensor unit
- 111: Person identification unit
- 112: Dialogue control unit
- 113: Voice input unit
- 114: Voice output unit
- 121: Intent analysis unit
- 122: Dialogue application
- 131: User management unit
- 132: Food information management and presentation unit
- 133: Recipe information management and presentation unit
- 141: User information table
- 200: Processing unit
- 201: Input unit
- 202: Output unit
- 203: Storage unit
- 204: Communication unit
- 205: Sensor unit
- 206: Preservation unit
- 211: Open/close detection unit
- 212: Putting-in/taking-out determination unit
- 213: Object identification unit
- 214: Object position detection unit
- 600: Processing unit
- 601: Input unit
- 602: Output unit
- 603: Storage unit
- 604: Communication unit
- 611: Food information management unit
- 621: Food information table
- 1001: CPU

## Claims

1. An information processing apparatus comprising a processing unit configured to:
manage, as information regarding a food preserved in a preservation cabinet, food information containing ownership right information regarding an ownership right for each food;
generate, in a case where information from an identified user contains the information regarding the ownership right, a response according to the ownership right information regarding a desired food of the user, on a basis of the managed food information; and
output the generated response.

2. The information processing apparatus according to claim 1, wherein
when the user puts a desired food in the preservation cabinet, the processing unit registers the food information regarding the food put in the preservation cabinet, and
when the user takes a desired food out of the preservation cabinet, the processing unit generates a response according to the ownership right information regarding the food taken out of the preservation cabinet.

3. The information processing apparatus according to claim 2, wherein
the food information contains ingredient information regarding an ingredient of the food, and
in a case where the food taken out of the preservation cabinet contains a foodstuff which the user cannot eat, the processing unit generates a response according to information regarding the foodstuff, on a basis of the ingredient information.

4. The information processing apparatus according to claim 3, wherein
the processing unit manages, as information regarding the user, user information containing information regarding a foodstuff which the user cannot eat for each user, and
in a case where the food taken out of the preservation cabinet contains a foodstuff which the user cannot eat, the processing unit generates a response according to information regarding the foodstuff, on a basis of the ingredient information and the user information.

5. The information processing apparatus according to claim 2, wherein
the information from the user contains information obtained from an utterance of the user.

6. The information processing apparatus according to claim 5, wherein
in a case where the utterance of the user contains information regarding an ownership right at a time when the user puts a desired food in the preservation cabinet, the processing unit adds ownership right information according to the ownership right to the food information regarding the food put in the preservation cabinet.

7. The information processing apparatus according to claim 5, wherein
in a case where the utterance of the user contains information regarding an ownership right at a time when the user takes a desired food out of the preservation cabinet, the processing unit acquires, from the food information, the ownership right information regarding the food taken out of the preservation cabinet, and
the processing unit generates the response on a basis of the acquired ownership right information.

8. The information processing apparatus according to claim 7, wherein
the food information further contains cooking date and time information regarding a cooking date and time of the food,
in a case where the utterance of the user contains information regarding the cooking date and time, the processing unit acquires, from the food information, the cooking date and time information regarding the food taken out of the preservation cabinet, and
the processing unit generates the response on a basis of the acquired ownership right information and cooking date and time information.

9. The information processing apparatus according to claim 1, wherein
the processing unit acquires recipe information regarding a recipe of a dish, and
the processing unit adds information according to the acquired recipe information to the food information.

10. The information processing apparatus according to claim 1, wherein
the food information contains various attributes concerning each food for each food.

11. The information processing apparatus according to claim 1, wherein
the processing unit outputs a voice response as the response.

12. The information processing apparatus according to claim 1, wherein
the food comprises a cooked food.

13. The information processing apparatus according to claim 1, wherein
the preservation cabinet comprises a refrigerator.

14. An information processing method comprising:
causing an information processing apparatus to manage, as information regarding a food preserved in a preservation cabinet, food information containing ownership right information regarding an ownership right for each food;
causing the information processing apparatus to generate, in a case where information from an identified user contains the information regarding the ownership right, a response according to the ownership right information regarding a desired food of the user, on a basis of the managed food information; and
causing the information processing apparatus to output the generated response.

15. A food preservation apparatus comprising:
a preservation unit configured to preserve a food; and
a processing unit configured to perform processing regarding the food,
wherein
the processing unit manages, as information regarding the food preserved in the preservation unit, food information containing ownership right information regarding an ownership right for each food,
the processing unit generates, in a case where information from an identified user contains the information regarding the ownership right, a response according to the ownership right information regarding a desired food of the user, on a basis of the managed food information, and
the processing unit outputs the generated response.
